# EUROPEAN PATENT APPLICATION

(11) **EP 4 300 704 A1**
(43) Date of publication of application: **03.01.2024**
(21) Application number: 22887538.1
(22) Date of filing: 25.10.2022
(51) Int. Cl.: H01M 50/566, H01M 50/516, H01M 50/167, H01M 50/213, B23K 26/0622, B23K 26/359, B23K 101/36

(54) **CYLINDRICAL BATTERY CELL HAVING SPIRAL WELDING PART, AND BATTERY MODULE COMPRISING SAME**

(30) Priority: 25.10.2021 KR 20210142324
(71) Applicant: LG Energy Solution, Ltd., Seoul 07335 (KR)
(72) Inventor: SON, Min Su, Daejeon 34122 (KR); KIM, Ji Woo, Daejeon 34122 (KR)
(74) Representative: Plasseraud IP
(86) International application number: PCT/KR2022/016306
(87) International publication number: WO 2023/075342

(57) **Abstract**

The present invention relates to a cylindrical battery cell including a cap assembly loaded on an upper end of a battery case having an electrode assembly received in the battery case; a crimping portion formed at an end of an upper part of the battery case, the crimping portion bent in a direction toward a center of the battery case while wrapping an outer periphery of the cap assembly, wherein the crimping portion is a negative electrode terminal, and wherein a top cap, which is a central part of the cap assembly, is a positive electrode terminal; and a spiral weld portion formed on at least one of the negative electrode terminal and the positive electrode terminal, wherein the spiral weld portion is discontinuous. Provided is the cylindrical battery cell having improved safety by preventing overwelding on the positive electrode terminal and the negative electrode terminal.

## Description

### [Technical Field]

This application claims the benefit of priority to Korean Patent Application No. 2021-0142324 filed on October 25, 2021, the disclosure of which is incorporated herein by reference in its entirety.

The present invention relates to a cylindrical battery cell having a spiral weld portion formed thereon and a battery module including the same. More particularly, the present invention relates to a cylindrical battery cell having a spiral weld portion formed thereon in order to prevent overwelding when welding is performed on the cylindrical battery cell using a nanosecond pulse laser and a battery module including the same.

### [Background Art]

Improvement in stability and increase in capacity of a lithium secondary battery, which is capable of being charged and discharged, have been rapidly achieved, and kinds of devices that use the lithium secondary battery as an energy source have been increased.

For example, the lithium secondary battery has been widely used as an energy source for wireless mobile devices, which are small multifunctional products, or wearable devices, which are worn on the body, and has also been used as an energy source for electric vehicles and hybrid electric vehicles presented as alternatives to existing gasoline and diesel vehicles, which cause air pollution, or as a medium- or large-sized battery pack for energy storage systems (ESS).

Based on the shape of a battery case, the lithium secondary battery is classified into a cylindrical secondary battery having an electrode assembly mounted in a cylindrical metal can, a prismatic secondary battery having an electrode assembly mounted in a prismatic metal can, or a pouch-shaped secondary battery having an electrode assembly mounted in a pouch-shaped case made of an aluminum laminate sheet. Thereamong, the cylindrical secondary battery has advantages of relatively large capacity and structural safety.

In order to manufacture the medium- or large-sized battery pack, it is necessary to electrically connect a plurality of cylindrical battery cells to each other. For example, a busbar or a metal plate may be coupled or a wire may be bonded to positive electrode terminals and negative electrode terminals of the cylindrical battery cells, whereby it is possible to electrically connect the plurality of cylindrical battery cells to each other.

A laser welding method may be used to perform electrical connection between the positive electrode terminals and the negative electrode terminals of the plurality of cylindrical battery cells. Continuous wave (CW) laser welding, millisecond pulse laser welding, microsecond pulse laser welding, or nanosecond pulse laser welding may be used as laser welding.

In general, a crimping portion of the cylindrical battery cell functions as a negative electrode terminal, and a top cap of the cylindrical battery cell functions as a positive electrode terminal. For electrical connection through the negative electrode terminal, straight pattern welding or circular pattern welding is performed on the crimping portion. At this time, continuous wave (CW) laser welding, millisecond pulse laser welding, or microsecond pulse laser welding is mainly used. If this welding method is used, however, an excessive amount of heat may be supplied to a weld portion, whereby abrupt heat conduction may be locally performed, and therefore a gasket may be damaged.

When the gasket is damaged and deformed, it is difficult to prevent leakage of an electrolytic solution, which is the original function of the gasket, whereby sealing performance of the cylindrical battery cell may be seriously affected and it may be difficult to secure safety of the cylindrical battery cell.

Consequently, it is appropriate to use a nanosecond pulse laser, which supplies a relatively small amount of heat to the weld portion.

Since the nanosecond pulse laser has a small spot size, however, weldability is reduced and time necessary for welding (tack time) is long when a straight pattern or a circular pattern, which is used in other welding methods, is used, and therefore workability is lowered.

Therefore, there is a need for technology capable of preventing overwelding when laser welding for electrical connection is performed on a positive electrode terminal and a negative electrode terminal of a cylindrical battery cell, thereby securing weldability and reducing welding time while minimizing damage to a gasket.

### [Disclosure]

### [Technical Problem]

The present invention has been made in view of the above problems, and it is an object of the present invention to provide a cylindrical battery cell having a discontinuous spiral weld portion formed thereon in order to prevent overwelding on a weld portion of an electrode terminal of the cylindrical battery cell and a battery module including the same.

### [Technical Solution]

A cylindrical battery cell according to the present invention to accomplish the above object includes a cap assembly loaded on an upper end of a battery case having an electrode assembly received in the battery case; a crimping portion formed at an end of an upper part of the battery case, the crimping portion bent in a direction toward a center of the battery case while wrapping an outer periphery of the cap assembly, wherein the crimping portion is a negative electrode terminal, and wherein a top cap, which is a central part of the cap assembly, is a positive electrode terminal; and a spiral weld portion formed on at least one of the negative electrode terminal and the positive electrode terminal, wherein the spiral weld portion is discontinuous.

The spiral weld portion may be formed such that weld lines do not overlap each other.

The spiral weld portion may be formed such that heat-affected portions do not overlap each other.

The spiral weld portion may be formed using a nanosecond pulse laser.

The spiral weld portion may be formed on the negative electrode terminal as the result of the nanosecond pulse laser moving straight and at the same time rotating spirally.

The spiral weld portion may be formed on the positive electrode terminal as the result of the nanosecond pulse laser moving in a circle and at the same time rotating spirally.

A succeeding weld line may be discontinuously formed while being rotated spirally such that the succeeding weld line does not overlap a preceding weld line.

The distance between unit spirals of the spiral weld portion may be equal to or greater than the horizontal width of each unit spiral for the negative electrode terminal and may be less than the horizontal width of each unit spiral for the positive electrode terminal.

A busbar, a wire, or a metal plate may be coupled to the spiral weld portion.

The present invention includes a battery module including the cylindrical battery cell, wherein a plurality of cylindrical battery cells is connected to each other in series and in parallel via a busbar, a wire, or a metal plate.

In addition, the present invention may provide various combinations of the above solving means.

### [Advantageous Effects]

As is apparent from the above description, in a cylindrical battery cell according to the present invention, heat overlap is minimized by a spiral weld portion that is discontinuously formed, whereby it is possible to prevent overwelding on the weld portion.

In addition, the spiral weld portion is formed such that heat-affected portions do not overlap each other, whereby formation of a softened area of a material is prevented, and therefore it is possible to prevent reduction in tensile force.

In addition, it is possible to secure a wide area of the weld portion, whereby it is possible to increase welding strength.

### [Description of Drawings]

FIG. 1 is a perspective view of a cylindrical battery cell according to the present invention.
FIG. 2 is a photograph of a negative electrode weld portion according to the present invention.
FIG. 3 is a photograph of a positive electrode weld portion according to the present invention.
FIG. 4 is a photograph of heat-affected portions of the negative electrode weld portion according to the present invention.
FIG. 5 is a photograph of heat-affected portions of a weld portion formed by spot welding.
FIG. 6 is a sectional photograph of a weld portion of each of cylindrical battery cells manufactured according to Example 1 and Comparative Example 2.
FIG. 7 illustrates photographs of the cylindrical battery cells manufactured according to Example 1 observed while air was injected thereinto from below.
FIG. 8 illustrates photographs showing the states of the cylindrical battery cells manufactured according to Comparative Example 2 before air injection and after air injection.
FIG. 9 is a schematic view and a photograph of an air leakage testing device.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the accompanying drawings.

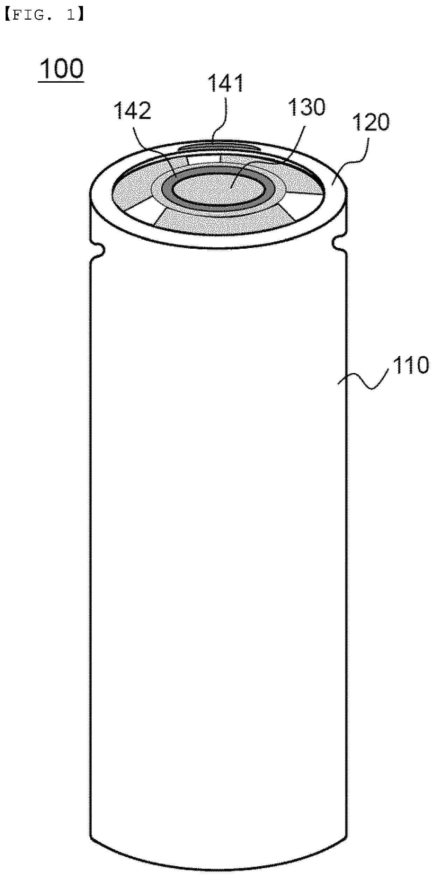

FIG. 1 is a perspective view of a cylindrical battery cell according to the present invention.

Referring to FIG. 1, the cylindrical battery cell 100 according to the present invention is configured such that an electrode assembly is received in a battery case 110 and a cap assembly is loaded on an upper end of the battery case 110. The end of an upper part of the battery case 110 forms a crimping portion 120 bent in a direction toward the center thereof while wrapping an outer periphery of the cap assembly.

The crimping portion 120 becomes a negative electrode terminal, and a top cap 130, which is a central part of the cap assembly, becomes a positive electrode terminal, wherein a discontinuous spiral negative electrode weld portion 141 is formed on the negative electrode terminal and a continuous spiral positive electrode weld portion 142 is formed on the positive electrode terminal.

Since the negative electrode weld portion is spirally formed, as described above, it is possible to increase the area of the weld portion, and therefore it is possible to secure welding strength. In addition, since the spiral weld portion is discontinuously formed such that spirals do not overlap each other at positions at which the spirals join each other, it is possible to prevent overwelding at the positions at which the spirals join each other. Consequently, it is possible to prevent damage to a gasket or leakage of an electrolytic solution due to overwelding.

Also, in the present invention, the negative electrode weld portion 141 and the positive electrode weld portion 142 are formed using a nanosecond pulse laser, which supplies a relatively small amount of heat to the negative electrode weld portion and the positive electrode weld portion, in order to prevent heat from concentrating on the negative electrode weld portion and the positive electrode weld portion.

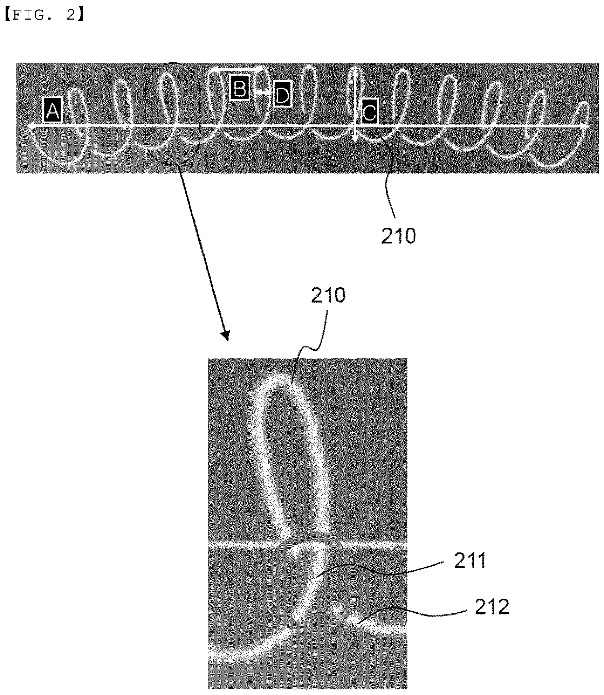

FIG. 2 is a photograph of a negative electrode weld portion according to the present invention.

Referring to FIG. 2, a discontinuous spiral negative electrode weld portion is formed, as shown in FIG. 2, which is a photograph of a negative electrode weld portion formed on a crimping portion, which functions as a negative electrode terminal. Specifically, since the crimping portion is formed so as to have a small width along a circular end of an upper part of a battery case, a nanosecond pulse laser forms a weld line 210 while moving straight and at the same time rotating spirally.

As the weld line 210 is spirally formed, as described above, spirals may overlap each other. In the present invention, however, the weld line is discontinuously formed in a spiral in order to prevent overlap between the spirals.

Specifically, in order for a preceding weld line 211 and a succeeding weld line 212 not to overlap each other while being rotated spirally, the succeeding weld line 212 is discontinuously formed.

When a nanosecond pulse laser is used, a narrow weld portion is formed. In the present invention, a spiral weld portion is formed in order to secure a wide weld portion. On the assumption that one spiral of the spiral weld portion is a unit spiral, the distance between the unit spirals may be formed such that heat-affected portions do not overlap each other to the highest degree in consideration of the horizontal width of the unit spiral.

The heat-affected portions do not overlap each other, as described above, whereby it is possible to prevent a gasket disposed under the weld portion from being damaged by heat.

For example, for the negative electrode terminal, in which the weld portion is formed approximately straight, the distance B between the unit spirals may be equal to or greater than the horizontal width D of the unit spiral.

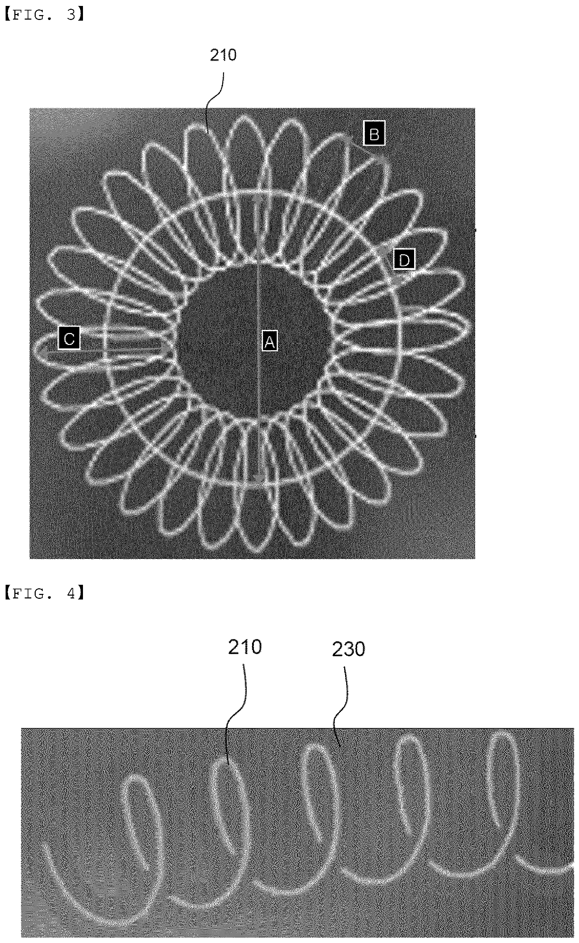

FIG. 3 is a photograph of a positive electrode weld portion according to the present invention.

Referring to FIG. 3, a continuous spiral weld portion is formed as the positive electrode weld portion. Specifically, a nanosecond pulse laser forms a weld line 210 while moving in a circle and at the same time rotating spirally.

When compared to spot welding or linear welding, therefore, it is possible to form a large-area weld portion, and therefore it is possible to improve welding strength of the positive electrode weld portion.

A base metal for the positive electrode weld portion may be made of an aluminum-based alloy, and the thickness of the base metal is generally 3.0 T or more, which means that the base metal is thick, whereby there is a low danger of the base metal being penetrated at the time of nanosecond pulse laser welding. In addition, there is no part that may be damaged by welding heat under the base metal, unlike the negative electrode weld portion. Consequently, the weld line of the positive electrode weld portion may be continuously formed without a discontinuous section in order to improve welding strength.

In the positive electrode terminal, the distance B between the unit spirals may be less than the horizontal width D of the unit spiral, since the weld line is more tightly disposed than in the negative electrode weld portion.

In addition, for the positive electrode weld portion, the thickness of the base metal is generally 3.0 T or more, which means that the base metal is thick, whereby the heat-affected portions may not overlap each other even though the welding line is more tightly disposed than in the negative electrode weld portion.

A busbar, a wire, or a metal plate may be coupled to the positive electrode terminal and the negative electrode terminal, whereby the cylindrical battery cell of the present invention may be connected to another cylindrical battery cell in series and/or in parallel or may be electrically connected to a device.

The cylindrical battery cell of the present invention may be used as an energy source of a device that requires high capacity and high output through the above connection structure.

Hereinafter, the present invention will be described with reference to an example. This example is provided only for easier understanding of the present invention and should not be construed as limiting the scope of the present invention.

### <Example 1>

Nanosecond pulse laser welding was performed in order to attach a metal plate made of an aluminum material to a crimping portion of a cylindrical battery cell, and a discontinuous spiral weld portion was formed, as shown in FIG. 2. At this time, a succeeding weld line was discontinuously formed such that the succeeding weld line did not overlap a preceding weld line.

FIG. 4 is a photograph of heat-affected portions of the negative electrode weld portion according to the present invention.

The heat-affected portions mean portions which are not directly melded by a welding heat source but the temperature of which is increased by welding heat, whereby physical properties of a base metal are changed. When the heat-affected portions overlap each other, a softened area of the base metal is formed, whereby welding strength may be weakened and tensile force may be reduced.

Referring to FIG. 4, it can be seen that the heat-affected portions 230 were formed around the weld line 210. The heat-affected portions may be partially overlap each other at the part at which the preceding weld line and the succeeding weld line are formed adjacent to each other; however, overlap between the heat-affected portions may be minimized by configuring the weld line as shown in FIG. 4.

For a spiral weld portion configured to minimize overlap between the heat-affected portions and secure welding strength, numerical values shown in Table 1 were derived as optimal values of A to D shown in FIGs. 2 and 3, tack time, the total number of spirals, and laser pulse per unit spiral.

**[Table 1]**

| Item | Negative electrode | Positive electrode | Remarks |
|---|---|---|---|
| Length of weld portion (A) (mm) | 9.5 | 9.42 | |
| Distance between unit spirals (B) (mm) | 0.49 | 0.19 | |
| Vertical width of unit spiral (C) (mm) | 1.2 | 1.4 | When weldable area is maximally secured |
| Horizontal width of unit spiral (D) (mm) | 0.3 | 0.3 | |
| Tack time (s) | 0.3 | 0.65 | |
| Total number of spirals | 12 | 28 | Spiral oscillation frequency (Hz)*tack time |
| Laser pulse per unit spiral (number of times) | 5,000 | 4,642 | (Laser frequency*tack time)/total number of spirals |

### <Comparative Example 1>

Spot welding was performed on a crimping portion and a top cap of a cylindrical battery cell using a micropulse laser. A weld portion constituted by a plurality of dots formed side by side was formed at a negative electrode terminal formed at the crimping portion, and a weld portion constituted by 15 dots arranged in a 3x5 matrix was formed at a positive electrode terminal formed at the top cap.

One dot constituting spot welding may be configured in the form of a spiral formed while being rotated about the center thereof, and tack time necessary to form a weld portion having 15 dots formed as described above is 0.3 seconds for a negative electrode and 1.5 seconds for a positive electrode.

Consequently, it can be seen that, when spot welding is performed, tack time for the positive electrode is longer than in Example 1.

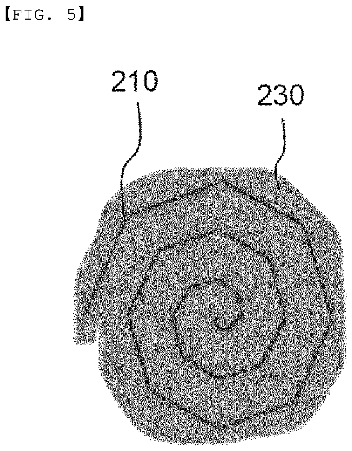

FIG. 5 is a photograph of heat-affected portions of a weld portion formed by spot welding.

Referring to FIG. 5, heat-affected portions 230 are formed along the periphery of a weld line 210, and overlap sections of the heat-affected portions are formed along the spiral weld line. When the heat-affected portions overlap each other, as described above, the base metal is softened, whereby welding strength may be weakened and tensile force may be reduced.

### <Comparative Example 2>

Nanosecond pulse laser welding was performed in the same manner as in Example 1 except that a succeeding weld line was continuously formed such that the succeeding weld line overlapped a preceding weld line, unlike Example 1.

### <Measurement experiment of laser penetration depth into weld portion>

110 cylindrical battery cells were prepared as each of the cylindrical battery cells manufactured according to Example 1 and Comparative Example 2.

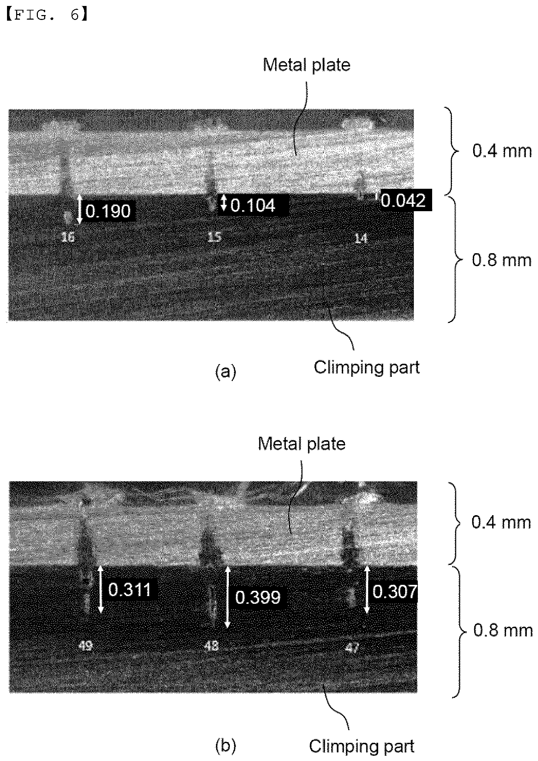

FIG. 6 is a sectional photograph of a weld portion of each of the cylindrical battery cells manufactured according to Example 1 and Comparative Example 2.
(a) of FIG. 6 shows the section of the weld portion of Example 1, and (b) of FIG. 6 shows the section of the weld portion of Comparative Example 2. 14, 15, and 16 shown in (a) of FIG. 6 and 47, 48, and 49 shown in (b) of FIG. 6 are identification numbers of the laser weld portions.

The laser penetration depths into the crimping portion at welding portions 14, 15, and 16 shown in (a) of FIG. 6 are 0.042 mm, 0.104 mm, and 0.190 mm, respectively, and the laser penetration depths into the crimping portion at welding portions 47, 48, and 49 shown in (b) of FIG. 6 are 0.307 mm, 0.399 mm, and 0.311 mm, respectively.

That is, it can be seen that the laser penetration depth into the weld portion of Comparative Example 2 formed such that the weld lines overlapped each other, was larger. When the weld portion is formed such that the weld lines overlap each other, therefore, a possibility of a gasket under the crimping portion being damaged by welding heat is increased.

### <Air leakage experiment>

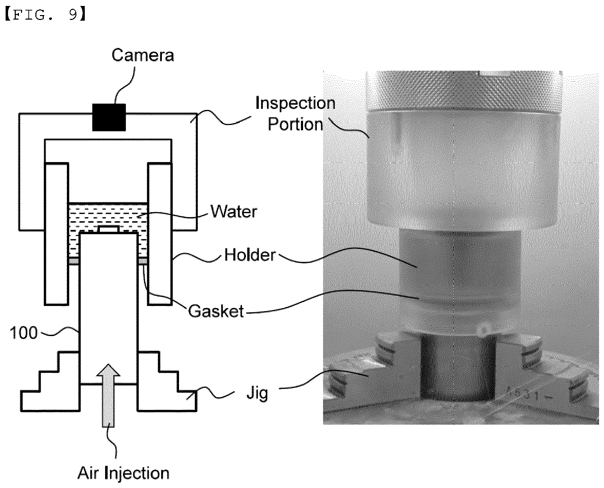

FIG. 9 is a schematic view and a photograph of an air leakage testing device.

Whether air leaked from the cylindrical battery cells manufactured according to Example 1 and Comparative Example 2 was checked using the air leakage testing device shown in FIG. 9.

The cylindrical battery cell 100 was mounted to an air leakage testing jig in a state of being inserted into a holder.

A gasket was interposed between the holder and the cylindrical battery cell 100 such that no space was formed therebetween, and the holder was filled with water.

An air injection hole was formed in a bottom of a cylindrical can, and whether air bubbles were formed in the water was checked through a camera while air was injected through the hole.

Air injection pressure was gradually increased through four steps while the air injection pressure was maintained so as to be lower than venting pressure of the cylindrical battery cell, i.e., 20 kgf/cm² to 23 kgf/cm². Specifically, air was injected at 15 kgf/cm² for 1 minute, at 16 kgf/cm² for 1 minute, at 17 kgf/cm² for 1 minute, and at 18 kgf/cm² for 2 minutes.

Air injection was performed using Model RTK18-0003 of PDK CO., Ltd.

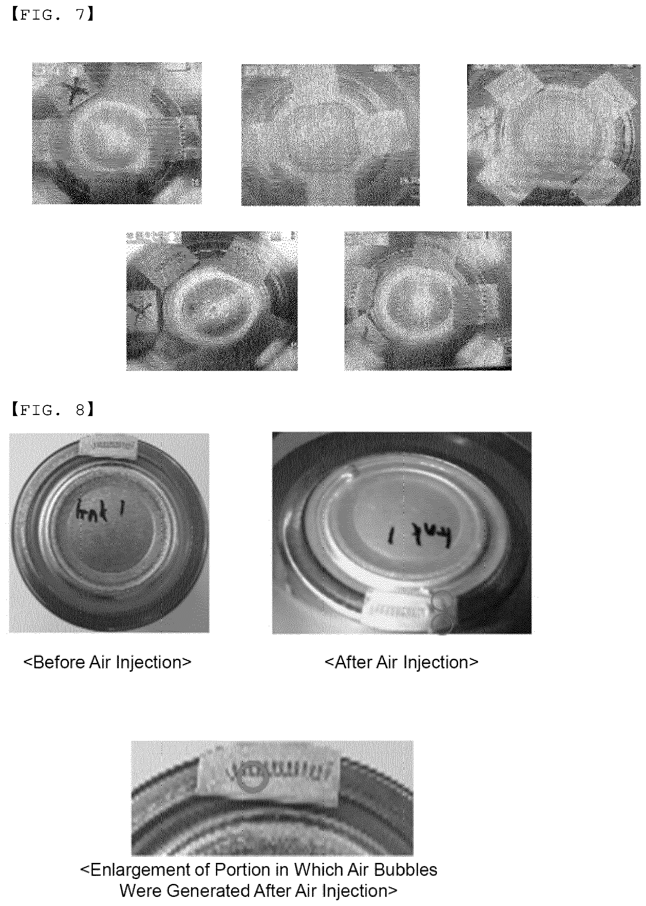

FIG. 7 illustrates photographs of the cylindrical battery cells manufactured according to Example 1 observed while air was injected thereinto from below, and FIG. 8 illustrates photographs showing the states of the cylindrical battery cells manufactured according to Comparative Example 2 before air injection and after air injection.

Referring to FIGs. 7 and 8, it can be seen that generation of air bubbles from the cylindrical battery cells manufactured according to Example 1 was not observed, i.e. no air leakage occurred, whereas air bubbles were generated from weld portions of 86 cylindrical battery cells, among the 110 cylindrical battery cells manufactured according to Comparative Example 2.

That is, it can be seen that, when the spiral weld portion is formed such that the welding lines overlap each other, the laser penetration depth is increased, whereby the gasket is damaged, and therefore the battery cells are determined to be defective through air leakage experiment.

Those skilled in the art to which the present invention pertains will appreciate that various applications and modifications are possible within the category of the present invention based on the above description.

### (Description of Reference Symbols)

100: Cylindrical battery cell
110: Battery case
120: Crimping portion
130: Top cap
141, 142: Weld portions
210: Weld line
211: Preceding weld line
212: Succeeding weld line
230: Heat-affected portion
A: Length of weld portion
B: Distance between unit spirals
C: Vertical width of unit spiral
D: Horizontal width of unit spiral

## Claims

1. A cylindrical battery cell comprising:
a cap assembly loaded on an upper end of a battery case having an electrode assembly received in the battery case;
a crimping portion formed at an end of an upper part of the battery case, the crimping portion bent in a direction toward a center of the battery case while wrapping an outer periphery of the cap assembly, wherein the crimping portion is a negative electrode terminal, and wherein a top cap, which is a central part of the cap assembly, is a positive electrode terminal; and
a spiral weld portion formed on at least one of the negative electrode terminal and the positive electrode terminal, wherein the spiral weld portion is discontinuous.

2. The cylindrical battery cell according to claim 1, wherein the spiral weld portion is formed such that weld lines do not overlap each other.

3. The cylindrical battery cell according to claim 1, wherein the spiral weld portion is formed such that heat-affected portions do not overlap each other.

4. The cylindrical battery cell according to claim 1, wherein the spiral weld portion is formed using a nanosecond pulse laser.

5. The cylindrical battery cell according to claim 1, wherein the spiral weld portion is formed on the negative electrode terminal as a result of a nanosecond pulse laser moving straight and at the same time rotating spirally.

6. The cylindrical battery cell according to claim 1, wherein the spiral weld portion is formed on the positive electrode terminal as a result of a nanosecond pulse laser moving in a circle and at the same time rotating spirally.

7. The cylindrical battery cell according to claim 5 or 6, wherein a succeeding weld line is discontinuously formed while being rotated spirally such that the succeeding weld line does not overlap a preceding weld line.

8. The cylindrical battery cell according to claim 1, wherein a distance between unit spirals of the spiral weld portion is equal to or greater than a horizontal width of each unit spiral for the negative electrode terminal and is less than the horizontal width of each unit spiral for the positive electrode terminal.

9. The cylindrical battery cell according to claim 1, wherein a busbar, a wire, or a metal plate is coupled to the spiral weld portion.

10. A battery module comprising the cylindrical battery cell according to any one of claims 1 to 9, wherein a plurality of cylindrical battery cells is connected to each other in series and in parallel via a busbar, a wire, or a metal plate.
